(19) Europäisches Patentamt / European Patent Office / Office européen des brevets

(11) **EP 2 303 777 B1**

(12) **EUROPÄISCHE PATENTSCHRIFT**

(45) Veröffentlichungstag und Bekanntmachung des Hinweises auf die Patenterteilung:
**20.03.2013 Patentblatt 2013/12**

(21) Anmeldenummer: **09780931.3**

(22) Anmeldetag: **22.07.2009**

(51) Int Cl.:
**C01B 33/18** (2006.01)   **C01B 33/193** (2006.01)
**B01J 20/10** (2006.01)

(86) Internationale Anmeldenummer:
**PCT/EP2009/059431**

(87) Internationale Veröffentlichungsnummer:
**WO 2010/012638 (04.02.2010 Gazette 2010/05)**

(54) **NEUARTIGE FÄLLUNGSKIESELSÄUREN FÜR TRÄGERANWENDUNGEN**

NOVEL PRECIPITATED SILICIC ACIDS FOR SUPPORT APPLICATIONS

NOUVELLES SILICES PRÉCIPITÉES POUR SERVIR DE SUPPORTS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **01.08.2008 DE 102008035867**

(43) Veröffentlichungstag der Anmeldung:
**06.04.2011 Patentblatt 2011/14**

(73) Patentinhaber: **Evonik Degussa GmbH**
**45128 Essen (DE)**

(72) Erfinder:
• **HEINDL, Frank**
**63517 Rodenbach (DE)**
• **DREXEL, Claus-Peter**
**63263 Neu-Isenburg (DE)**
• **HASELHUHN, Frank**
**63543 Neuberg (DE)**

(56) Entgegenhaltungen:
**EP-A- 1 357 156        WO-A-2007/036620**
**DE-A1- 19 807 700      US-A- 5 800 608**
**US-A- 6 013 234        US-B1- 6 335 396**

**Beschreibung**

Die vorliegende Erfindung betrifft neuartige Fällungskieselsäuren für den Einsatz als Trägermaterial, deren Herstellung und deren Verwendung.

In vielen Anwendungsgebieten wie z. B. im Bereich der Erzeugnisse für den Pflanzenschutz, bei pharmazeutischen Wirkstoffen, bei der Herstellung von Futtermitteln und Futtermitteladditiven oder in der Lebensmittelindustrie werden Trägermaterialien eingesetzt um z. B. flüssige oder harzförmige Wirkstoffe in eine fließfähige und lagerstabile Form zu überführen. Zur Herstellung, der festen Formulierungen werden flüssige oder schmelzbare Stoffe teilweise zusammen mit Hilfsstoften (zum Beispiel Tensiden und Sprengmitteln) auf Trägermaterialien aufgezogen. Bei festen Stoffen dienen die Trägermaterialien dabei in erster Linie als Füllstoff, während sie bei flüssigen oder niedrig schmelzenden Stoffen die Flüssigkeit aufnehmen. Dadurch sollen leicht handhabbare, äußerlich trockene Absorbate erhalten werden, die dann entweder als Pulver direkt (sogenannte WP, wettable Powder) oder, weiterverarbeitet, als Granutate/Extrudate (WG, Water dispersable Granules) auf den Markt kommen.

Eine wesentliche Anforderung an das Trägermaterial ist eine hinreichend hohe Saugfähigkeit, so dass möglichst wenig Trägermaterial eingesetzt werden muss. Mittels herkömmlicher Verfahren können bis zu 65 %-ige Absorbate (bezogen auf eine Flüssigkeitsdichte von 1,00 g /ml) mit ausreichender Fließfähigkeit hergestellt werden.

Eine weitere Anforderung neben der hohen Beladung des Trägermaterials mit Wirkstoff ist, dass die Absorbate eine gute Fließfähigkeit aufweisen und bei Transport, Umfüllen und der Herstellung der Absorbate möglichst wenig stauben. Zur Verbesserung der Fließfähigkeit wurde daher z. B. in der EP 0984772 B1 und der EP 0966207 B 1 vorgeschlagen mikrogranuläre Fällungskieselsäuren in etwa sphärischer Form und mit einer mittleren Partikelgröße von über 150 $\mu$m als Trägermaterial zu verwenden. Die auf diese Weise erhaltenen Absorbate weisen zwar eine verbesserte Fließfähigkeit auf. Die Verarbeitungseigenschaften sind jedoch nicht optimal, da bei der Herstellung von Absorbaten, speziell bei hoher Beladung mit Flüssigkeit, mit diesen Fällungskieselsäuren häufig Anbackungen in den Mischern und Förderanlagen beobachtet werden, welche die Ausbeute und die Produktqualität mindern und teilweise aufwendig entfernt werden müssen.

les besteht daher nach wie vor ein hoher Bedarf an preiswerten Trägermaterialen welche gut verarbeitbar sind und es erlauben hoch beladene und gut fließfähige Absorbate herzustellen.

Aufgabe der vorliegenden Erfindung war es daher, neuartige Fällungskieselsäuren bereitzustellen welche zumindest einige der Nachteile der Trägermaterialien Absorbate des Standes der Technik nicht oder nur in verringertem Maße aufweisen und welche es erlauben, neuartige Absorbate mit verbesserten anwendungstechnischcn Eigenschaften herzustellen. Ferner soll ein Verfahren zur Herstellung der Fällungskieselsäuren und zur Herstellung der Absorbate bereitgestellt werden.

Eine spezielle Aufgabe bestand darin Fällungskieselsäuren bereitzustellen welche es erlauben Absorbate mit sehr guter Fließfähigkeit und guter Verarbeitbarkeit herzustellen.

Diese Aufgabe und weitere nicht explizit genannte Aufgaben werden durch die in den Ansprüchen, der Beschreibung und den Beispielen näher definierten Fällungskieselsäure, Absorbaten und Herstellungsverfahren gelöst.

Überraschender Weise wurde gefunden, dass es nicht ausreicht Trägermaterialien mit sphärischer Form und einer mittleren Partikelgröße zur der Herstellung von Absorbaten zu verwenden. Die Erfinder haben durch eingehende Unterstrchungen herausgefunden, dass Anbackungen im Mischer unter anderem auf die Entstehung feinteiliger Partikelfraktionen durch die mechanische Belastung der Trägerkieselsäuren bei der Absorbatherstellung zurückzuführen sind. Es wurde weiterhin herausgefunden, dass härtere Fällungskieselsäuren zu weniger Anbackungen führen. Durch ein spezielles Herstellungsverfahren der erfindungsgemäßen Fällungskieselsäuren gelang es die Härte der Kieselsäurepartikel so zu steigern, dass diese der mechanischen Belastung bei der Absorbatherstellung deutlich besser standhalten und somit die Staubbildung bei der Absorbatherstellung deutlich verringert werden konnte, gleichzeitig aber auch sichergestellt ist, dass die gehärteten Fällungskieselsäuren eine hinreichend hohe Saugfähigkeit aufweisen. Die erfindungsgemäßen Fällungskieselsäuren zeichnen sich daher durch eine hohe Porosität - ausgedrückt durch die DBP-Zahl--- und besser stabilisierte Porenwände aus. D.h. die Erhöhung der mechanischen Stabilität konnte erreicht und gleichzeitig eine hohe Absorptionsfähigkeit erhalten werden.

Durch die höhere mechanische Stabilität der erfindungsgemäßen Kieselsäuren wird der Feinanteil in den Mischaggregaten verringert. Dies wiederum hat den Vorteil, dass es zu weniger Anbackungen in Mischaggregaten kommt.

In einer bevorzugten Ausführungsform weisen die erfindungsgemäßen Kieselsäuren einen annähernd neutralen pH-Wert auf, so dass diese sehr universell als Träger eingesetzt werden können und keine negativen Auswirkungen auf die Lagerstabilität der absorbierten Flüssigkeiten aufweisen.

Weiterhin weisen die erfindungsgemäßen Kieselsäuren im vergleich zu kommerziell eingesetzten Trägerkieselsäuren wie z. B. Tixosil 38 X der Firma Rhodia Chimie oder Hubersil 5170 ein optimales Verhältnis aus Härte, d.h. mechanischer Stabilität und Saugvermögen auf.

Gegenstand der vorliegenden Erfindung sind daher Fällungskieselsäuren mit

- einer DBP-Aufnahme (wasserfrei) von 210 bis 270 g / 100 g
- einem $d_{50}$-Wert nach 1 min Ultraschalleinwirkung von 220 bis 400 $\mu$m
- einem Anteil an Teilchen kleiner 200 $\mu$m nach 1 min Ultraschalleinwirkung von weniger als 35 Vol. %.

Gegenstand der vorliegenden Erfindung ist zudem ein Verfahren zur Herstellung der erfindungsgemäßen Fällungskieselsäuren umfassend die Schritte

a) bereitstellen einer Fällungskieselsäure mit einer mittleren Partikelgröße $d_{50}$ ohne Ultraschalleinwirkung von 250 bis 600 $\mu$m und einem Feuchtegehalt von 2 bis 70 Gew. %
b) In Kontakt bringen der Kieselsäure aus Schritt a) mit zumindest einer basischen Substanz oder zumindest einer Lösung von zumindest einer basischen Substanz für 1 min bis 72 h
c) Trocknen der nach Schritt b) erhaltenen Fällungskieselsäure

Gegenstand der vorliegenden Erfindung ist weiterhin die Verwendung der erfindungsgemäßen Kieselsäuren als Trägersubstanz.

Schließlich sind Gegenstand der vorliegenden Erfindung Absorbate umfassende zumindest eine erfindungsgemäße Kieselsäure.

Die Gegenstände der vorliegenden Erfindung werden nachfolgend im Detail beschrieben. Im Rahmen der vorliegenden Erfindung werden die Begriffe Fällungskieselsäure(n), gefällte Kieselsäure(n) und Kieselsäure(n) synonym verwendet.

Die erfindungsgemäßen Fällungskieselsäuren zeichnen sich durch

- eine DBP-Aufnahme (wasserfrei) von 210 bis 270 g / 100 g
- einen $d_{50}$-Wert nach 1 min Ultraschalleinwirkung von 220 bis 400 $\mu$m
- einen Anteil an Teilchen kleiner 200 $\mu$m nach 1 min Ultraschalleinwirkung von weniger als 35 Vol. %.

aus.

Eine ausreichend hohe DBP-Aufnahme stellt sicher, dass die erfindungsgemäßen Fällungskieselsäuren mit hinreichenden Mengen an zu absorbierender Substanz beladen werden können und so eine der Aufgaben, nämlich möglichst hoch beladene Absorbate mit möglichst wenig Trägermaterial herstellen zu können, gelöst werden kann. Ist die DBP zu hoch, d.h. die Fällungskieselsäure zu porös, so kann es vorkommen, dass die mechanische Stabilität nicht mehr gewährleistet werden und es zu einer erhöhten Bildung von Feinanteil bei der Herstellung der Absorbate kommen kann. Die erfindunggemäßen Fällungskieselsätiren weisen daher bevorzugt eine DBP-Aufnahme (wasserfrei) von 220 bis 265 g / 100 g und besonders bevorzugt von 225 bis 260 g / 100 g auf

Eine weitere wesentliche Eigenschaft der erfindungsgemäßen Fällungskieselsäuren ist ihre Härte. Die mechanischen Belastungen durch die Einwirkung der Mischaggregate auf die Fällungskieselsäuren bei der Herstellung der Absorbate werden simuliert durch Einwirkung von Ultraschallwellen auf die Fällungskieselsäure für 1 min. Die erfindungsgemäßen Fällunoakieseisäuren zeichnen sich durch eine besonders hohe Härte aus, so dass die mittlere Partikelgröße $d_{50}$ nach 1 min Uttraschall bei 25 W im Bereich von 220 bis 400 $\mu$m, bevorzugt 240 bis 380 $\mu$m, besonders bevorzugt 260 bis 360 $\mu$m und ganz besonders bevorzugt 270 bis 350 $\mu$m liegt. Diese Partikelgröße ist wichtig um eine ausreichende Fließfähigkeit der mit den erfindungsgemäßen Fällungskieselsäuren hergestellten Absorbate sicherzustellen. Dieser Effekt kann noch verstärkt werden, wenn sichergestellt wird, dass die erfindungsgemäßen Fälltingskieselsäuren eine möglichst sphärische Form aufweisen. In einer bevorzugten Ausführungsform weisen die erfindungsgemäßen Fällungskieselsätiren daher eine in etwa sphärische Form auf, wobei in etwa sphärische Form der Form der Fänungskieselsäuren entspricht welche diese typischer Weise nach einer Düsenturmtrocknung aufweisen. Beispiele für Fällungskieselsäuren mit in etwa sphärischer Form finden sich in der DE 198 07 700 A1, Figuren 1 und 3 bis 5 oder der US 6,013,234, Figure 1.

Neben der mittleren Partikelgröße nach Ultraschall bzw. mechanischer Belastung, ist die Härte der erfindungsgemäßen Fällungskieselsäuren derart, dass der Anteil an kleinen Partikeln, d.h. Partikeln mit einer Partikelgröße kleiner 200 $\mu$m nach 1 min Ultraschalleinwirkung, bevorzugt weniger als 35 Vol. %, besonders bevorzugt weniger als 32 Vol. %, ganz besonders bevorzugt 1 bis 30 Vol. %, insbesondere bevorzugt 1 bis 28 Vol. % und speziell bevorzugt 1 bis 25 Vol. % beträgt. Dadurch wird erreicht, dass selbst nach mechanischer Belastung die Entstehung von Anbackungen im Mischer während der Herstellung der Absorbate weitest gehend bis vollständig verhindert wird. Weiterhin wird dadurch sichergestellt, dass die Staubbildung der Fällungskieselsäure nach dem Transport bzw. nach der Herstellung der Absorbate deutlich verringert wird.

In einer weiteren bevorzugten Ausfuhrungsform der vorliegenden Erfindung weisen die erfindungsgemäßen Fällungskieselsäuren pH-Wert im Bereich von 5,5 bis 9,5, bevorzugt 5,5 bis 9, besonders bevorzugt 5,5 bis 8,5, ganz besonders bevorzugt 6 bis 8 auf. Dieser weitestgehend neutrale pH-Wert der Fällungskieselsäuren stellt ein breites Anwendungsspektrum im Hinblick auf die zu absorbierenden Flüssigkeiten sicher, da zu stark saure bzw. zu stark basische Trägermaterialen die Zersetzung oder anderweitige chemisch Umwandlung der zu absorbierenden Flüssigkeiten auslösen bzw. beschleunigen können.

Die erfindungsgemäßen Fällungskieselsäuren können nach einem Verfahren hergestellt werden, welches die folgenden Schritte umfasst:

a) bereitstellen einer Fällungskieselsäure mit einer mittleren Partikelgröße $d_{50}$ ohne Ultraschalleinwirkung von 230 bis 600 $\mu$m und einem Feuchtegehalt von 2 bis 70 Gew. %

b) In Kontakt bringen der Fällungskieselsäure aus Schritt a) mit zumindest eine basischen Substanz oder zumindest einer Lösung von zumindest einer basischen Substanz für 1 min bis 72 h, bevorzugt bei einer Temperatur von 10 °C bis 150 °C

c) Trocknen der mit Base behandelten Fällungskieselsäure

Die in Schritt a) des erfindungsgemäßen Verfahrens eingesetzten Fällungskieselsäuren weisen eine mittlere Partikelgröße $d_{50}$ von 230 bis 600 $\mu$m, bevorzugt 250 bis 500 $\mu$m, besonders bevorzugt 250 bis 400 $\mu$m und ganz besonders bevorzugt 270 bis 380 $\mu$m auf. Dadurch wird sichergestellt, dass die am Ende des Verfahrens erhaltenen Fällungskieselsäuren eine optimale mittlere Partikelgröße aufweisen.

Weiterhin müssen die in Schritt a) des erfindungsgemäßen Verfahrens eingesetzten Fällungskieselsäuren einen Feuchtegehalt von 2 bis 70 Gew. % aufweisen. Ohne an eine bestimmte Theorie gebunden zu sein, ist die Anmelderin der Ansicht, dass eine hohe Feuchte der eingesetzten Fällungskieselsäuren sicherstellt, dass die in Schritt b) eingesetzte Base hinreichend tief in die Poren der Fällungskieselsäuren eindringen und somit eine hinreichende Härtung erfolgen kann. Eine zu geringe Feuchte hingegen führt dazu, dass eine unzureichende Härtung erfolgt. Die in Schritt a) des erfindungsgemäßen Verfahrens vorgelegten Fällutigskieselsätiren weisen daher einen Feuchtegehalt von 2 bis 70 Gew. % auf.

Da in Schritt b) des erfindungsgemäße Verfahrens im wesentlichen nur die Härte der Fällungskieselsäuren verändert werden soll, weisen die in Schritt a) des erfindungsgemäßen Verfahren vorgelegten Fällungskieselsäuren vorzugsweise eine DBP Aufnahme (wasserfrei) von 210 bis 350 g / 100 g, bevorzugt 220 bis 300 g / 100 g, besonders bevorzugt 230 bis 280 g /100 g, ganz besonders bevorzugt 230 bis 270 und insbesondere 240 bis 260 g / 100 g auf.

Die in Schritt a) des erfindungsgemäßen Verfahrens eingesetzten fällungskieselsäuren wurden bevorzugt zuvor mindestens einem Trocknungsschritt, jedoch optional auch mehreren Trocknungsschritten unterworfen. Grundsätzlich kann hierbei jede bekannte Trocknungsart wie z. B. Trocknung mittels Stromtrockner, Sprühtrockner, Etagentrockner, Bandtrockner, Drehrohrtruckner, Flash-Trockner, Spin-Flash-Trockner oder Düsenturmtrockner, verwendet werden. Diese Trocknungsvarianten schließen den Betrieb mit einem Atomizer, einer Ein- oder Zweistoffdüse oder einem integrierten Fließbett ein. In einem bevorzugten Verfahren wurde dabei in zumindest einem Trocknungsschritt eine Düsenturmtrocknung durchgeführt. Dadurch kann erreicht werden, dass bereits die in Schritt a) eingesetzten Fällungskieselsäuren eine sphärische Form aufweisen.

In Schritt b) des erfindungsgemäßen Verfahrens wird die Fällungskieselsäure aus Schritt a) mit zumindest einer basischen Substanz oder zumindest einer Lösung von zumindest einer basischen Substanz für 1 min bis 72 h, bevorzugt bei einer Temperatur von 10 bis 150 °C in Kontakt gebracht. Ohne an eine bestimmte Theorie gebunden zu sein, sind die Anmelder der Ansicht, dass durch die Behandlung mit zumindest einer Base, die inneren Porenwände der Fällungskieselsäuren zum Teil aufgelöst und neu gebildet werden, wobei sich stabilere Wandungen ausbilden. Abhängig von der verwendeten Base und der Porenstruktur der verendeten Fällungskieselsäure kann die Kontaktzeit 1 min bis 72 h bevorzugt 1 min bis 48 h besonders bevorzugt 1 min bis 24 h ganz besonders bevorzugt 1 min bis 16 h und insbesondere bevorzugt weniger als 6 h betragen. Die Temperatur bei der die Fällungskieselsäure mit zumindest einem basischen Mittel in Kontakt gebracht wird, je nach Reaktor in der Kieselsäureschüttung bzw. der Reaktionschicht gemessen, beträgt vorzugsweise 10 °C bis 150 °C, besonders bevorzugt 10 bis 120 °C, ganz besonders bevorzugt 10 °C bis 100 °C, insbesondere bevorzugt 10 °C bis 80 °C und speziell bevorzugt 10 °C bis 60 °C.

Das in Kontakt bringen der Fällungskieselsäure mit dem basischen Mittel kann bei Atmosphärendruck, reduziertem Atmosphärendruck oder aber auch bei erhöhtem Druck von 0,2 bis 10 bar erfolgen.

Die gehärtete Fällungskieselsäure wird in einer bevorzugten Variante bei der Trocknung in Schritt c) durch Austreiben der Base mittels heißer Gase oder unter Vakuum neutralisiert oder in einer anderen bevorzugten Variante vor oder nach Schritt c) durch in Kontakt bringen mit einem Säuerungsmittel neutralisiert.

Die Trocknung in Schritt c) kann mittels aller bekannter partikelerhaltender Trocknungsmethoden wie z. B. mittels Stromtrockner, Etagentrockner, Bandtrockner, Drehrohrtrockner erfolgen. Diese Trocknungsvarianten schließen den Betrieb mit einem Atomizer, einer Ein- oder Zweistoffdüse oder einem integrierten Fließbett ein.

Weiterhin kann beim Einsatz von gasförmigen Basen die Trocknung in Schritt c) bevorzugt gleichzeitig mit dem Austreiben der gasförmigen Base mittels heißer, trockener Luft und / oder heißer trockener Gase erfolgen.

Es ist möglich eine Hydrophobierung der erfindungsgemäßen Fällungskieselsäuren durchzuführen, bevorzugt mit Silanen, Siloxane, Polysiloxanen oder mit Wachsen.

In einer ersten bevorzugten Variante des erfindungsgemäßen Verfahrens weist die in Schritt a) eingesetzte Fällungskieselsäure einen Wassergehalt. von 2 bis 70 Gew. %, bevorzugt 2 bis 50 Gew. %, besonders bevorzugt 5 bis 25 Gew. %, ganz besonders bevorzugt 10 bis 20 Gew. % auf. Der Feuchtegehalt der Fällungskieselsäure kann entweder dadurch erreicht werden, dass die Fällsuspension derart getrocknet wird, das direkt eine Fällungskieselsäure mit dem notwendigen Feuchtegehalt erhalten wird oder dadurch, dass eine Fällungskieselsäure mit einem geringeren Feuchtegehalt mit Wasser derart in Kontakt gebracht wird, dass sich der gewünschte Feuchtegehalt einstellt. Dieses in Kontakt bringen kann nach allen dem Fachmann bekannten Verfahren erfolgen.

In dieser Verfahrensvariante ist es weiterhin bevorzugt, dass in Schritt b) eine bei 23°C und Atmosphärendruck gasförmige Base, ausgewählt aus der Gruppe, die aus gasförmigen Alkylaminen und Ammoniak besteht, verwendet wird. Dabei wird die Fällungskieselsäure derart mit der gasförmigen Base in Kontakt gebracht, dass der pH-Wert der Fällungskieselsäure nach in Kontakt bringen mit der gasförmigen Base im Bereich von 8 bis 12, bevorzugt 8 bis 11, besonders bevorzugt 8,5 bis 11 und ganz besonders bevorzugt 9 bis 11 liegt. Das in Kontaktbringen kann durch Überleitung der gasförmigen Base über die Fällungskieselsäure in einem geeigneten Reaktor z. B. Drehrohrofen oder durch Einbringen des Gases und der Fällungskieselsäure in einen Autoklaven erfolgen.

In dieser Ausführungsfonn beträgt die Kontaktzeit 1 min bis 72 h, bevorzugt 1 min bis 48 h, besonders bevorzugt 1 min bis 24 h, ganz besonders bevorzugt 1 min bis 16 h und insbesondere bevorzugt weniger als 6 h. Die Temperatur bei der die Fällungskieselsäure mit zumindest einer gasförmigen Base in Kontakt gebracht wird beträgt 10 °C bis 150 °C, bevorzugt 10 °C bis 120 °C, besonders bevorzugt 10 °C bis 100 °C, ganz besonders bevorzugt 10°C bis 80 °C und insbesondere bevorzugt 10°C bis 60 °C.

Das in Kontakt bringen der Fällungskieselsäure mit der gasförmigen Base kann bei Atmosphärendruck oder aber auch bei erhöhtem Druck von 0,2 bis 10 bar erfolgen.

Die in dieser Ausführungsform verwendete gasförmige Base hat den Vorteil, dass die Base nach beendeter Härtung leicht wieder aus der Fällungskieselsäure entfernt werden kann. So erfolgt in dieser Ausführungsform die Trocknung in Schritt c) bevorzugt durch Austreiben des Wassers und der Base mittels zumindest einem Gas, ausgewählt aus der Gruppe bestehend aus Luft, Wasserdampf, Edelgasen, oder Gemischen der zuvor genannten Gase und/oder Dämpfe. Bevorzugt erfolgt die Trocknung mittels Wasserdampf oder Luft, besonders bevorzugt Luft. Ebenfalls möglich ist der Einsatz von Vakuumtrocknern welche ohne den Einsatz von Gasen auskommen. Das zum Austreiben des Wassers und der Base verwendete Gas hat bevorzugt eine Temperatur von größer gleich 20 °C, besonders bevorzugt 20 °C bis 700 °C, ganz besonders bevorzugt 40 °C bis 500 °C und insbesondere bevorzugt 60 °C bis 350 °C und ganz speziell bevorzugt 80°C bis 250 °C.

Um die Base vollständig austreiben zu können und so während Schritt c) einen pH von 5,5 - 8,0 zu erreichen, kann es in dieser Ausführungsform notwendig sein die Fällungskieselsäure in Schritt c) bis auf einen Feuchtegehalt von weniger als 3 Gew. % zu trocknen. Da Trägerkieselsäuren jedoch üblicherweise einen Feuchtegehalt von 5 bis 7 Gew. % aufweisen kann der Feuchtegehalt im Nachgang zur Austreibung der Base durch Wasserzugabe entsprechend eingestellt werden.

Das Austreiben des Wassers und der Base mittels heißer Gase oder im Vakuum in Schritt c) kann mittels Stromtrockner, Etagentrockner, Bandtrockner, Drehrohrtrockner, Wirbelschichttrockner, Trockenschrank oder in Vakuumtrockner erfolgen.

Zur Reduzierung des pH Werts der Kieselsäure kann alternativ zur Austreibung der Base mittels heißer Gase während der Trocknung in Schritt c), zwischen den Schritten b) und c) der nach Schritt c) zumindest ein Säuerungsmittel zugegeben werden, bis zur Einstellung eines pH-Wertes der Kieselsäure von 5,5 bis 8,0 erfolgen. Im Anschluss kann die neutralisierte Kieselsäure direkt getrocknet, oder der Trocknung ein oder mehrere Waschschritte vorgeschaltet werden.

Als Säuerungsmittel können verdünnte oder konzentrierte Mineralsäuren, wie z. B. HCl, $HNO_3$, $H_3PO_4$. organische Säuren, wie z.B. Essigsäure, Ameisensäure oder $CO_2$ gasförmig oder in Lösung verwendet werden.

Wenn die Ansäuerung nach Schritt c) erfolgt, kann ein weiterer Trocknungsschritt erforderlich werden. Hierbei können ebenfalls alle bekannten wie z. B. Trocknung mittels Stromtrockner, Etagentrockner, Bandtrockner, Drehrohrtrockner, Trockenschrank, Wirbelschichttrockner oder mittels heißer Gase erfolgen.

In einer zweiten bevorzugten Ausführungsform des erfindungsgemäßen Verfahrens weist die Fällungskieselsäure in Schritt a) einen Wassergehalt bis zu 70 Gew. %, bevorzugt 2 bis 70 Gew. % auf Der Feuchtegehalt der Fällungskieselsäure kann entweder dadurch erreicht werden, dass die Fällsuspension derart getrocknet wird, dass direkt eine Fällungskieselsäure mit dem notwendigen Feuchtegehalt erhalten wird oder dadurch, dass eine Fällungskieselsäure mit einem geringeren Feuchtegehalt mit Wasser oder einer Baselösung derart in Kontakt gebracht wird, dass der gewünschte Feuchtegehalt sich einstellt. Dieses in Kontakt bringen kann nach allen dem Fachmann bekannten Verfahren erfolgen.

In dieser Verfahrensvariante ist es weiterhin bevorzugt, dass als Base in Schritt b) eine Lösung enthaltend mindestens eine Base, nachfolgend Basenlösung genannt, oder eine feste Base verwendet wird und dass die Base ausgewählt ist aus der Gruppe, die aus Alkalimetallhydroxiden. Erdalkalimetallhydroxiden, Alkalimetalloxiden, Erdalkalimetalloxiden, Ammoniak, Carbonaten, Bicarbonaten, Wassergläsern. und Aminen besteht. Die Basenlösung wird mittels eines geeigneten Lösungsmittels hergestellt. Geeignete Lösungsmittel sind zum Beispiel Wassers, verzweigte oder unverzweigte, einwertige oder mehrwertige Alkohole mit 1 bis 10 Kohlenstoffatomen.

In dieser Ausführungsform wird die Fällungskieselsäure derart mit der Base und/oder der Basenlöstrng in Kontakt gebracht, dass der pH-Wert der Fällungskieselsäure nach in Kontakt bringen mit der Base und/oder der Basenlösung im Bereich von 8 bis 12, bevorzugt 8 bis 11, besonders bevorzugt 8,5 bis 11 und ganz besonders bevorzugt 9 bis 11 legt. Das in Kontaktbringen kann durch. Aufsprühen der Basenlösung auf die Fällungskieselsäure, durch Auftropfen der Basenlösung auf die Fällungskieselsäure oder durch Einrühren bzw. Einmischen der Fällungskieselsäure in die Basenlösung oder durch Herstellen einer Suspension bzw. Dispersion der Fällungskieselsäure in der Basenlösung, erfolgen.

In dieser Ausführungsform beträgt die Kontaktzeit 1 min bis 72 h, bevorzugt 1 min bis 48 h, besonders bevorzugt 1 min bis 24 h, ganz besonders bevorzugt 1 min bis 16 h und insbesondere bevorzugt weniger als 6 h. Die Temperatur bei der die Fällungskieselsäure mit zumindest einer Base in Kontakt gebracht wird, je nach Reaktor in der Kieselsäureschüttung bzw. der Reaktionsschicht gemessen, beträgt Temperatur von beträgt 10 °C bis 150 °C, bevorzugt 10 °C bis 120 °C, besonderes bevorzugt 10 °C bis 100 °C, ganz besonders bevorzugt 10 °C bis 80 °C und insbesondere bevorzugt 10 °C bis 60 °C.

Das in Kontakt bringen der Fällungskieselsäure mit der gasförmigen Base kann bei Atmosphärendruck oder aber auch bei erhöhtem Druck von 0,2 bis 10 bar erfolgen.

Die in dieser Ausführungsform verwendete Basenlösung kann leichter gehandhabt werden als die gasförmige Base in der ersten bevorzugten Ausführungsform und hat somit den hat den Vorteil, dass ein geringerer aparativer Aufwand betrieben werden muss.

In dieser Ausführungsform kann die Trocknung in Schritt c) mittels aller bekannter partikelerhaltender Trocknungsmethoden wie z. B. mittels Stromtrockner, Etagentrockner, Bandtrockner, Drehrohrtrockner, oder Vakuumtrocknern erfolgen. Diese Trocknungsvarianten schließen den Betrieb mit einem Atomizer, einer Ein- oder Zweistoffdüse oder einem integrierten Fließbett ein.

Um in diesem Fall eine gehärtete Fällungskieselsäure mit einem pH-Wert von 5,5 bis 8 zu erhalten, kann zwischen den Schritten b) und c) oder nach Schritt c) der pH-Wert der Fällungskieselsäure durch in Kontakt bringen mit einem Säuerungsmittel auf pH 5,5 bis 8,0 erfolgen. Im Anschluss kann die neutralisierte Kieselsäure direkt getrocknet oder der Trocknung ein oder mehrere Waschschritte vorgeschaltet werden.

Als Säuerungsmittel können verdünnte oder konzentrierte Mineralsäuren, wie z. B. HCl, $HNO_3$, $H_3PO_4$, organische Säuren, wie z.B. Essigsäure, Ameisensäure oder $CO_2$ gasförmig oder in Lösung verwendet werden.

Wen die Ansäuerung nach Schritt c) erfolgt kann ein weiterer Trocknungsschritt erforderlich werden. Diese zusätzliche Trocknung kann mittels aller bekannter partikelerhaltender Trocknungsmethoden wie z. B. mittels Stromtrockner, Etagentrockner, Bandtrockner oder Drehrohrtrockner, erfolgen. Diese Trocknungsvarianten schließen den Betrieb mit einem Atomizer, einer Ein- oder Zweistoffdüse oder einem integrierten Fließbett ein.

Die erfindungsgemäßen Fällungskieselsäuren können zur Herstellung von Absorbaten eingesetzt werden, wobei es sich bei den absorbierten Substanzen bevorzugt um Härtungsmittel oder Initiatoren, Vernetzungsmittel, Katalysatoren, pharmazeutisch Wirk- und hilfsstoffe, kosmetische Wirk- und Hilfsstoffe, Kosmetische Wirk- und Hilfsstoffe, Reinigungs- und/oder Pflegemittel, Geschmacks-, Aroma- und Duftstoffe, Futtermittel bzw. Futtermittelzusatzstoffen wie z. B. Aminosäuren, Vitamine, Mineralstoffe, Lebensmittel bzw. Lebensmittelzusatzstoffe, Farbstoffe und/oder Pigmente, Aminosäuren, Oxidations- oder Bleichmittel, Additive mit mikrobizider, insbesondere fungizider oder bakterizider Wirkung, Chemikalien für die Land- und Forstwirtschaft und/oder ein Betonzusatzstoffe. Dabei kann es sich bei dem auf dem Träger absorbierten, Material um eine Flüssigkeit, ein Öl, ein Harz, eine Lösung, eine Dispersion, eine Suspension, oder eine Schmelze handeln.

Absorbate im Bereich Futtermittel und Futtermittelzusatzstoffe umfassen z. B. Vitamine, Mineralstoffe, Aminosäuren und Aromen. Besonders bevorzugt handelt es sich dabei um Ameisensäure, Propionsäure, Milchsäure, Phosphorsäure, Cholinchloridlösung, Vitamin E-Acetat und Pflanzenextrakte wie zum Beispiel Tagetesextrakt.

Absorbate im Bereich Land- und Forstwirtschaft umfassen z. B. absorbierte Düngemittel wie z. B. nitrat - und/ oder phosphathaltige Dünger, Pflanzenschutzmittel, Schädlingsbekämpfungsmittel wie z B. Herbizide, Fungizide, Insektizide.

Absorbate im Bereich kosmetische Erzeugnisse umfassen z. B. Öle wie etherischen Öle, Parfümöle, Pflegeöle, Duftöle und Silikonöle, antibakterielle, antivirale oder fungizide Wirkstoffe: desinfizierend und antimikrobiell wirkende Substanze; Desodorantien; Antioxidantien; biologisch wirksame Stoffe und biogene Wirkstoffe; Vitamine und Vitaminkomplexe; Enzyme und enzymatische Systeme wie Amylasen, Cellulasen, Lipasen und Proteasen; kosmetisch aktiven Substanze wie Inhaltsstoffe für Kosmetika und Körperpflegemittel; wasch- und reinigungsaktive Substanzen wie Tenside aller Art, wasch- und/oder reinigungsaktive anorganische und organische Säuren. Soil-repellent-und Soilrelease-Wirkstoffe, Oxidantien und Bleichmittel, Bleichmittelaktivatoren, Buildern und Cobuildern, Antiredepositionsadditive, Vergrauungs- und Verfärbungsinhibitoren, Wirksubstanzen zum Farbschutz, Substanzen und Additiven zur Wäschepflege, optischen Aufheller, Schauminhibitoren, pH-Stellmitteln und pH-Puffersubstanzen;

Absorbate im Bereich Lebensmittel bzw. Lebensmittelzusatzstoffe umfassen z. B. absorbierte Aromen, Nahrungsergänzungsmittel, Vitamine, Mineralstoffe, Aminosäuren.

Absorbate aus pharmazeutischen Wirkstoffen umfassen alle Arten von pharmazeutischen Wirkstoffen wie zum Beispiel $\alpha$-Proteinase-Inhibitor, Abacavir, Abeiximab, A-carbose, Acetylsalicylsäure, Acyclovir, Adenosin, Albuterol, Aldesleukin, Alendronat, Alfuzosin, Alosetron, Alprazolam, Alteptase, Ambroxol, Amifostin. Amiodaron, Amisulprid, Amlodipin, Amoxicillin, Amphetamin, Amphotericin, Ampicillin, Amprenavir, Anagrelid, Anastrozol, Ancrod, Anti-Hämophiliefaktor, Aprotinin, Atenolol, Atorvastatin, Atropin, Azelastin, Azithromycin, Azulen, Barnidipin, Beclomethason, Benazepril, Benscrazid, Beraprost, Betamethason, Betaxolol, Bezafibrat, Bicalutamid, Bisabolol, Bisoprolol. Botulinus-Toxin, Brimonidin, Bromazepam, Bromocriptin, Budesonid, Bupivacain, Bupropion, Buspiron, Butorphanol, Cabergolin, Calcipotrien, Calcitonin, Calcitriol, Campher, Candesartan, Candesartan cilexetil, Captopril, Carbamazepin, Carbidopa, Carboplatin, Carvedilol, Cefactor, Cefadroxil, Cefaxitin, Cefazolin, Cefdinir, Cefepim, Cefixim, Cefmetazol, Cefoperazon, Cefotiam, Cefoxopran, Cefpodoxim, Cefprozil, Ceftazidim, Ceftibuten, Ceftriaxon, Cefuroxim, Celecoxib, Celiprolol, Cephalexin, Cerivastatin, Cetirizin, Chloramophenicol, Cilastatin, Cilazapril, Cimetidin, Ciprofibrat, Ciprofloxacin, Cisaprid, Cisplatin, Citalopram, Clarithromycin, Clavulansäure, Clindamycin, Clomipramin, Clonazepam, Clonidin, Clopidogrel, Clotrimazol, Clozapin, Cromolyn, Cyclophosphamid. Cyclosporin, Cyproteron, Dalteparin, Deferoxamin, Desogestrel, Dextroamphetamin, Diazepam, Diclofenac, Didanosin, Digitoxin, Digoxin, Dihydroergotamin, Diltiazern, Diphtherie-Protein, Diphtherie-Toxoid, Divalproex, Dobutamin, Docetaxel, Dolasetron, Donepezil, Dornase-$\alpha$, Dorzolamid, Doxazosin, Doxifluridin, Doxorubicin, Dydrogesteron, Ecabet, Efavirenz, Enalapril, Enoxaparin, Eperison. Epinastin, Epirubicin, Eptifibatid, Erythropoietin-$\alpha$, Erythropoietin-$\beta$, Etanercept, Ethinylöstradiol, Etodolac, Etoposid, Faktor-VIII, Famciclovir, Famotidin, Faropenem, Felodipin, Fenofibrat, Fenoldopam, Fentanyl, Fexofenadin, Filgrastim, Finasterid, Flomoxef, Fluconazol, Fludarabin, Flunisolid, Flunitrazepam, Fluoxetin, Flutamid, Fluticason, Fluvastatin, Fluvoxamin, Follitropin-$\alpha$, Follitropin-$\beta$, Formolerol, Fosinopril, Furosemid. Gabapentin, Gadodiamid, Ganciclovir, Gatifloxacin, Gemcitabin, Gestoden, Glatiramer, Glibenclamid, Glimepirid, Glipizid, Glyburid, Goserelin, Granisetron, Griseofulvin, Hepatitis-B-Antigen, Hyaluronasäure, Hycosin, Hydrochlorthiazid, Hydrocodon, Hydrocortison, Hydromorphon, Hydroxychloroquin, Hylan G-F 20, Ibuprofen, Ifosfamid, Imidapril. Imiglucerase, Imipenem, Immunoglobulin, Indinavir, Indomethacin, Infliximab, Insulin, Insulin, human, Insulin Lispro, Insulin aspart, Interferon-$\beta$, Interferon-$\alpha$. Iod-125. Iodixanol, Iohexol, Iomeprol, Iopromid, Iopromid, Ioversol, Ioxoprolen, Ipratropium, Ipriflavon, Irbesartan, Irinotecan, Isosorbid, Isotretinoin, Isradipin, Itraconazol, Kaliumchlorazepat, Kaliumchlorid, Ketorolac, Ketolifen, Keuchhusten-Vakzin, Koagulationsfaklor-IX, Lamivudin, Lamotrigin, Lansoprazol, Latanoprost, Leflunomid, Lenograstim, Letrozol, Leuprolid, Levodopa, Levofloxacin, Levonorgestrel, Levothyroxin, Lidocain, Linezolid, Lisinopril, Lopamidol, Loracarbef, Loratadin, Lorazepam, Losartan, Lovastatin, Lysinacetytsalicylsäure, Manidipin, Mecobalamin, Medroxyprogesteron, Megestrol, Meloxicam, Menatetrenon, Meningokokken-Vakzin, Menotropin, Meropenem, Mesalamin, Metaxalon, Metformin, Methylphenidat, Methylprednisolon, Metoprolol, Midazolam, Milrinon, Minocyclin, Mirtazapin, Misoprostol, Mitoxantron, Mociobemid, Modafinil, Mometason, Montelukast, Morniflumat, Morphium, Moxinoxacin, Mykophenolat, Nabumeton, Nadroparin, Naproxen, Naratriptan, Nefazodon, Nelfinavir, Nevirapin, Niacin, Nicardipin, Nicergolin, Nifedipin, Nilutamid, Nilvadipin, Nimodipin, Nitroglycerin, Nizatidin, Norethindron, Norfloxacin, Octreotid, Olanzapin, Omeprazol, Ondansetron, Orlistat, Oseltamivir, Östradiol, Östrogene, Oxaliplatin, Oxaprozin, Oxolinsäure, Oxybutynin, Paclitaxel, Palivizumab, Pamidronat, Pancrelipase, Panipenem, Pantoprazol, Pantoprazol, Paracetamol, Paroxetin, Pentoxifyllin, Pergolid, Phenytoin, Pioglitazon, Piperacillin, Piroxicam, Pramipexol, Pravastatin, Prazosin, Probucol, Progesteron, Propafenon, Propofol, Propoxyphen, Prostaglandin, Quetiapin, Quinapril, Rabeprazol, Raloxifen, Ramipril, Ranitidin, Repaglinid, Reserpin, Ribavirin, Riluzol, Risperidon, Ritonavir, Rituximab, Rivastigmin, Rizatriptan, Rofecoxib, Ropinirol, Rosiglitazon, Salmeterol. Saquinavir, Sargramostim, Serrapeplase, Sertralin, Sevelamer, Sibutramin, Sildenafil, Simvastatin, Somatropin, Somatropin, Sotalol, Spironolacton, Stavudin, Sulbactam, Sulfaethidol, Sulfamethoxazol, Sulfasalazin, Sulpirid, Sumatriptan, Tacrolimus, Tamoxifen, Tamsulosin, Tazobactarn, Teicoplanin, Temocapril, Temozolomid, Tenecteplase, Tenoxicam, Teprenon, Terazosin, Terbinafin, Terbutalin, Tetanus Toxoid, Tetrabenazin, Tetrazapam, Thymol, Tiagabin, Tibolon, Ticarcillin, Ticlopidin, Timolol, Tirofiban, Tizanidin, Tobramycin, Tocopherylnicotinat, Tolterodin, Topiramat, Topotecan, Torasemid, Tramadol, Trandolapril., Trastuzumab, Triamcinolon, Triazolam, Trimebutin, Trimethoprim, Troglitazon, Tropisetron, Tulobuterol, Unoproston, Urofollitropin, Valacyclovir, Valproinsäure, Valsartan, Vancomycin, Venlafaxin, Verapamil, Verteporfin, Vigabatrin, Vinorelbin, Vinpocetin, Voglibose, Warfarin. Zafirlukast, Zaleplon, Zanamivir, Zidovudin, Zolmitriptan, Zolpidem, Zopiclon und deren Derivate. Unter pharmazeutischen Wirkstoffen sind jedoch auch andere Substanzen wie Vitamine, Provitamine, essentielle Fettsäuren, Extrakte pflanzlicher und tierischer Herkunft, Öle pflanzlicher und tierischer Herkunft, pflanzliche Arzneizubereitungen und homöopathische Zubereitungen.

Die erfindungsgemäßen Fällungskieselsäuren oder Silikate können insbesondere als Träger für Futtermitteladditive wie z. B. Ameisensäure, Propionsäure, Milchsäure, Phosphorsäure, Cholinchloridlösung, Vitamin E-Acetat oder Pflanzenextrakten zum Beispiel Tagetesextrakt verwendet werden.

Weiterhin können die erfindungsgemäßen Fällungskieselsäuren als Trägermaterial für chemische Zwischen-

EP 2 303 777 B1

produkte wie Melaminharze oder Lackadditive verwendet werden.

Zur Herstellung der Absorbate werden die erfindungsgemäßen Fällungskieselsäuren mit mindestens einer zu absorbierenden Substanz in Kontakt gebracht, so dass die Substanz in die Poren der Fällungskieselsäure eindringen kann. Hierzu sind alte dem Fachmann bekannten Technologien wie z. B. Misch- oder Wirbelschichtverfahren anwendbar. Bevorzugt wird die Fällungskieselsäure in einer Feststoffmischeinheit wie z. B. Kneter, Schaufeltrockner, Taummelmischer, Vertikalmischer, Schaufelmischer, Schugimischer, Zementmischer, Gerickekontimischer, Eirichmischer und/oder Silomischer vorgelegt. Die Verfahrensparameter werden abhängig von der Art und Zusammensetzung der zu absorbierenden Substanz, den apparativen Gegebenheiten und den Verfahrensanforderungen entsprechend ausgewählt. Entsprechende Techniken und Verfahren sind dem Fachmann hinreichend bekannt.

Der Gehalt an absorbierter Substanz in den Absorbaten beträgt zwischen 5 ml / 100 g Silica und 230 ml / 100g Silica.

Die Reaktionsbedingungen und die physikalisch/chemischen Daten der erfindungsgemäßen Fällungskieselsäuren werden mit den folgenden Methoden bestimmt:

**Bestimmung der DBP-Aufnahme**

Die DBP-Aufnahme (DBP-Zahl), die ein Maß für die Saugfähigkeit der Fällungskieselsäure ist, wird in Anlehnung an die Norm DIN 53601 wie folgt bestimmt:

Die Feuchte der für die DBP-Aufnahme verwendeten Silica soll 4 - 8 Gew. % betragen. Sofern notwendig kann diese durch Trocknen oder Anfeuchten mit Wasser eingestellt werden. Eine möglicherweise notwendige Trocknung kann bei 105°C geschehen. Die Befeuchtung der Probe kann z. B. durch die Konditionierung einer in einem Klimaschrank in dünner Lage ausgebreiteten Silica erzeugt werden. Ein direktes Befeuchten mit flüssigem Wasser ist zu vermeiden da dies zwangsläufig zu einer inhomogenen Verteilung der Flüssigkeit führen würde.

12,50 g pulverförmige oder kugelförmige Kieselsäure mit 4 - 8 Gew. % Feuchtegehalt werden in die Kneterkammer des Absorptometers gegeben (Absorptometer C der Fa. Brabender mit Stahlkammer (Art.-Nr.1.2316) oder Absorptometer der Fa. Hitec (Modell DABS) mit Stahlkammer (Art.-Nr.1597)). Unter ständigem Mischen (Umlaufgeschwindigkeit der Kneterschaufeln 125 U/min) tropft man bei Raumtemperatur durch den Dosimaten (Absorptometer C: Schott-Bürette TITRONIC Universal, Nennvolumen 50 ml bzw. Absorptometer Hitec: Schott-Bürette TITRONIC Universal, Nennvolumen 50 ml) Vestinol C (Dibutylphthalat) mit einer Geschwindigkeit von 4 ml/min in die Mischung. Das Einmischen erfolgt bei nur geringem Drehmoment. Der Verlauf des Drehmoments wird auf dem Monitor des Steuer-PC's verfolgt. Gegen Ende der Bestimmung wird das Gemisch pastös, was einen steilen Anstieg des Drehmomentes zur Folge hat. Bei einer Anzeige von 600 digits (Drehmoment von 0,6 Nm) wird durch einen elektrischen Kontakt sowohl der Kneter als auch die DBP-Dosierung abgeschattet. Der Synchronmotor für die DBF-Zufuhr ist mit einem digitalen Zählwerk gekoppelt, sodass der Verbrauch an DBF in ml abgelesen werden kann. Die DBF-Aufnahme wird in g/(100 g) angegeben und anhand der folgenden Formel berechnet:

$$DBP = \frac{V * D * 100}{E} * \frac{g}{100\,g} + K$$

mit

DBF    = DBP-Aufnahme in g/(100 g)
V       = Verbrauch an DBP in ml
D       = Dichte von DBP in g/ml (1,047 g/ml bei 20 °C)
E       = Einwaage an Kieselsäure in g
K       = Korrekturwert gemäß Feuchtekorrekturtabelle in g/(100 g)

Die DBF-Aufnahme ist für die wasserfrei, getrocknete Kieselsäure definiert. Bei Verwendung von feuchten Fällungskieselsäuren ist der Korrekturwert K für die Berechnung der DBF-Aufnahme zu berücksichtigen. Dieser Wert kann anhand der folgenden Korrekturtabelle ermittelt werden. Z. B. würde ein Wassergehalt der Kieselsäure von 5,8 % einen Zuschlag von 33 g/(100 g) für die DBF-Aufnahme bedeuten. Die Feuchte der Kieselsäure wird gemäß der Methode "Bestimmung der Feuchte bzw. des Trocknungsverlusts" ermittelt.

Tabelle 1: Feuchtekorrekturtabelle für Dibutylphthalataufnahme (wasserfrei)

| % Feuchte | ,% Feuchte | | | | |
|---|---|---|---|---|---|
| | ,0 | ,2 | ,4 | ,6 | ,8 |
| 4 | 28 | 29 | 29 | 30 | 31 |
| 5 | 31 | 32 | 32 | 33 | 33 |
| 6 | 34 | 34 | 35 | 35 | 36 |
| 7 | 36 | 37 | 38 | 38 | 39 |
| 8 | 39 | 40 | 40 | 41 | 41 |

**Bestimmung der Partikelgröße mittels Laserbeugung**

Die Anwendung der Laserbeugung zur Bestimmung von Teilchengrößen basiert auf der Erscheinung, dass Teilchen monochromatisches Licht mit unterschiedlichem Intensitätsmuster beugen. Diese Beugung ist abhängig von der Teilchengröße. Je kleiner die Teilchen, desto größer sind die Beugungswinkel.

**Bestimmung des $d_{50}$-Wertes ohne Ultraschalleinwirkung und des $d_{50}$-Wertes nach 1 min Ultraschalleinwirkung,**

Die Probenvorbereitung und Messung (Spülen des Moduls, etc.) erfolgt im Fall hydrophiler (mit Wasser benetzbarer) Fällungskieselsäuren mithilfe einer Dispergierflüssigkeit (0,05 m-% Tetra-Natrium-diphosphat in VE-Wasser). Im Falle von hydrophoben (nicht mit Wasser benetzbarer) Fällungskieselsäuren mit einem Ethanol/Wassergemisch (Volumenverhältnis 1:1).
Vor Beginn der Messung lässt man das Laserbeugungsgerät LS 230 (Fa. Beckman Coulter, Art.-Nr.6605210) mit dem Flüssigkeitsmodul (Small Volume Module Plus, 120 ml, Fa. Beckman Coulter mit internem US-Finger (Durchmesser 6 mm), Art.-Nr.6605506) inklusive einem US-Prozessor SONICS Vibracell (Modell VCX 130) 2 h warmlaufen, spült das Modul dreimal mit der Dispergierflüssigkeit und kalibriert es. Im Falle von hydrophoben Fällungskieselsäuren spült man dreimal mit dem Ethanol/Wassergemisch.

In der Steuerleiste der Gerätesoftware (z. Bsp. Version 3.29) wählt man über dem Menüpunkt "Messung" das Dateifenster "Opt. Modell berechnen" aus und legt die Brechungsindizes in einer .rfid-Datei fest: Flüssigkeitsbrechungsindex B: I. Real = 1,332 (1,359 für Ethanol); Material Brechungsindex Real = 1,46; Imaginär = 0,1; Formfaktor 1, das Menü-Fenster "Probeninfo" aus und definiert den Probennamen, Desweiteren wird hier der Dateiname zum Abspeichern der Messung, sowie die Dispergierflüssigkeit festgelegt und mit "OK." bestätigt. In der Steuerleiste wählt man nun den Menü-Fenster "Messzyklus" aus. In diesem Fenster werden nach Bestätigen "Neue Probe" die folgenden Einstellungen definiert bzw. aktiviert:

"Offsetmessung", "Justieren", "Hintergrundmessung", "Probenkonzentration einstellen", "Probeninfo eingeben" (dient zur Überprüfung der in der Probeninfo deklärierten Probe), 1 Messung starten" und deaktivieren der PIDS-Funktion. Des Weiteren wird in der Auswahl "Messinfo eingeben" die Messzeit von 60 Sekunden festgelegt. Ergänzend erfolgt hier die Auswahl des optischen Modells "Fraunhofer.rfd" und die Aktivierung von "Größenverteilung" (Haken setzen bei "während der Messung"), sowie "Datei speichern". Die Pumpengeschwindigkeit wird am Mess-Gerät (bzw. am Small Volume Modul) auf 75 % eingestellt.

Mittels eines Spatels erfolgt die Zugabe der Kieselsäureprobe, d.h. des ungesiebten Originalmaterials, bis eine Messkonzentration von 8 bis 12 % erreicht wird und das Gerät "OK" meldet. Es erfolgt nun eine Nachdispergierung für 60 Sekunden durch Umpumpen ohne Ultrabeschallung. Durch die Aktivierung der Menü-Auswahl "Start" wird die Messung bei Raumtemperatur vorgenommen und der $d_{50}$-Wert ohne Ultraschallbehandlung ermittelt. Anschließend wird die Dispersion für 60 Sekunden mit 25 Watt, nicht gepulst, mittels des internen Ultraschall-Fingers im SVM-Modul beschallt und erneut gemessen, wodurch man den $d_{50}$-Wert nach 1 min Ultraschallbehandlung erhält. Die $d_{50}$-Werte werden jeweils aus den Rohdatenkurven mittels der Gerätesoftware auf Basis der Volumenverteilung und der optischen Modellparameter (Fraunhofer.rfd-Datei) ermittelt. Bei den d50-Werten handelt es sich um die Medianwerte.

**Bestimmung des Anteil an Teilchen < 200 um nach 1 min Ultraschalleinwirkung**

Der Anteil an Partikeln < 200 $\mu$m nach Ultrabeschallung in % wird aus der kumulativen Volumenverteilungskurve die man aus der für die Bestimmung des $d_{50}$-Wertes nach 1 min Ultraschalleinwirkung beschriebenen Partikelgrößenbstimmung mittels Laserbeugung (Coulter LS 230) erhält, graphisch ermittelt.

## Bestimmung des Trocknungsverlustes (der Feuchte)

Die Feuchte von Kieselsäuren wird gemäß ISO 787-2 nach 2-stündiger Trocknung in einem Umlufttrockenschrank bei 105 °C bestimmt. Dieser Trocknungsverlust besteht überwiegend aus Wasserfeuchtigkeit.

## Bestimmung des pH-Wertes der fertig gehärteten Fällungskieselsäure

Die Feststoffeinwaagen aller pH-Wert-Messungen beziehen auf getrocknetes Material. Wird ungetrocknetes Originalmaterial verwendet, muss dessen Trockenverlust (Feuchte) ermittelt werden. Die Einwaagen für die pH-Wert-Bestimmung werden anschließend um den Wert des Trocknungsverlustes korrigiert.

Die Bestimmung des pH-Wertes der Kieselsäure erfolgt in 5°%iger wässriger Suspension bei Raumtemperatur in Anlehnung an DIN EN ISO 787-9. Entgegen den Vorgaben dieser Norm wird eine Einwaage von 5,00 g Kieselsäure in 95 ml entionisiertem Wasser gewählt.

Die folgenden Beispiele sollen die Erfindung näher erläutern, ohne ihren Umfang zu beschränken.

Allgemeine Beschreibung der Versuchsdurchführung der Härtung der Fällungskieselsäuren:

25g Fällungskieselsäure wurden in einer verschließbaren Glasflasche mit einem Volumen von 250 ml zu 48,5 ml 0,1 n $NaOH_{wäßrig}$ versetzt und per Hand 1 mittels eines Spatels 1 min umgerührt. Danach wurde die Flasche verschlossen und 15 min bei Raumtemperatur (ca. 23 °C) gelagert. Danach wurde der Inhalt der Schraubflasche auf einer vorerwärmten Glasschale (Durchmesser 30 cm) gleichmäßige Schichtdicke ausgebreitet und für 15 min in einem auf 175°C vorgeheizten Trockenschrank getrocknet. Die getrocknete und gehärtete Fällungskieselsäure wurde anschließend in einer Glasschale (Durchmesser 30 cm) in einer gleichmäßigen Schichtdicke ausgebreitet und für 30 min bei 23°C und 50% relativer Raumfeuchte in einem Klimaschrank konditioniert. Der pH-Wert der getrockneten und konditionierten Probe betrug 8,6.

## Beispiel 1

Als Ausgangskieselsäure wurde Sipernat® 2200 der Firma Evonik Degussa GmbH mit einer mittleren Partikelgröße $d_{50}$ von 358 $\mu$m und einem Wassergehalt (Feuchte) von 5,0 Gew. % verwendet und nach dem oben beschriebenen allgemeinen Verfahren gehärtet.

Die physikalisch chemischen Eigenschaften der erfindungsgemäßen Fällungskieselsäure nach Beispiel 1 werden in nachfolgender Tabelle 2 aufgeführt.

## Vergleichsbeispiele

Tabelle 2 enthält Angaben über die physikalisch-chemischen Eigenschaften von Vergleichskieselsäuren des Standes der Technik. Vergleichsbeispiel 1 entspricht der Ausgangskieselsäure für Beispiel 1, Sipernat 2200® der Firma Evonik Degussa GmbH, welche kommerziell als Trägerkieselsäure verfügbar ist. Bei Vergleichsbeispiel 2 handelt es sich um Tixosil 38 X® der Firma Rhodia Chimie und bei Vergleichsbeispiel 3 um Hubersil 5170® der Firma Huber.

Tabelle 2:

| Bespiel | DBP (wasserfrei) [g / (100g)] | $d_{50}$ nach 1 min Ultraschall bei 25 Watt [$\mu$m] | Anteil an Partikeln < 200 $\mu$m nach 1 min Ultraschall bei 25 Watt [Vol. %] |
|---|---|---|---|
| Beispiel 1 | 228 | 289,6 | 22 |
| Vergleichsbeispiel 1 | 253 | 33,6 | 93 |
| Vergleichsbeispiel 2 | 264 | 174,7 | 58 |
| Vergleichsbeispiel 3 | 204 | 303 | 20 |

Tabelle 2 zeigt, dass die in den Vergleichsbeispielen 1 und 2 getesteten Fällugskieselsäuren zwar eine hinreichende Saugfähigkeit aufweisen, jedoch zu große Anteile an feinen Partikeln aufweisen. Der mittlere Durchmesser $d_{50}$ nach mechanischer Belastung (simuliert durch den Ultraschalleintrag) ist sehr viel kleiner als bei der erfindungsgemäß gehärteten Fällungskieselsäure. Analog ist der Anteil an Partikeln < 200 $\mu$m im Vergleich zur erfindungsgemäßen Fällungskieselsäure sehr viel höher, d.h. die Vergleichskieselsäuren führen bei der Herstellung von Absorbaten zu Anbackungen im Kneter und zu einer erhöhten Staubbildung, Vergleichskieselsäure 3 ist zwar hart, hat aber den Nachteil, dass sie eine zu geringe Saugfähigkeit aufweist.

Besonders deutlich wird der Effekt der Härtung beim Vergleich des erfindungsgemäßen Beispiels 1 mit Vergleichsbeispiel 1. Die ungehärtete Fällungskieselsäure des Vergleichsbeispiels 1 weist nach mechanischer Belastung einen um ca. 88 % niedrigeren $d_{50}$-Wert im Vergleich zu Beispiel 1 auf. Der Anteil an Partikeln < 200 $\mu$m nach mechanischer Belastung der ungehärteten Fällungskieselsäure des Vergleichsbeispiels 1 ist hingegen mehr als 4-mal höher als in Beispiel 1. Dies belegt, dass die erfindungsgemäßen Fällungskieselsäuren deutlich härter sind als die bislang üblicher Weise kommerziell eingesetzten Trägerkieselsäuren

**Patentansprüche**

1.  Fällungskieselsäure mit

     - einer DBP-Aufnahme (wasserfrei) von 210 bis 270 g / 100 g
     - einem $d_{50}$-Wert nach 1 min Ultraschalleinwirkung von 220 bis 400 $\mu$m
     - einem Anteil an Teilchen kleiner 200 $\mu$m nach 1 min Ultraschalleinwirkung von weniger als 35 Vol. %.

2.  Fällungskieselsäure nach Anspruch 1,
    **dadurch gekennzeichnet,**
    **dass** sie einen pH-Wert im Bereich von 5,5 bis 9,5 und/oder einen $d_{50}$-Wert nach 1 min Ultraschall von 270 bis 360 $\mu$m und/oder einen Anteil an Teilchen kleiner 200 $\mu$m nach 1 min Ultraschalleinwirkung von 1 - 30 Vol. % und/oder dass sie eine in etwa sphärische Partikelform aufweist.

3.  Verfahren zur Herstellung von gefällter Kieselsäuren umfassend die Schritte

     a) bereitstellen einer Fällungskieselsäure mit einer mittleren Partikelgröße $d_{50}$ ohne Ultraschalleinwirkung von 230 bis 600 $\mu$m und einem Feuchtegehalt von 2 bis 70 Gew. %
     b) In Kontakt bringen der Fällungskieselsäure aus Schritt a) mit zumindest einer basischen Substanz oder zumindest einer Lösung von zumindest einer basischen Substanz für 1 min bis 72 h, bevorzugt bei einer Temperatur von 10 bis 150 °C;
     c) Trocknen der mit Base behandelten Fällungskieselsäure

4.  Verfahren nach Anspruch 3,
    **dadurch gekennzeichnet,**
    **dass** die in Schritt a) eingesetzte Fällungskieselsäure eine DBP Aufnahme (wasserfrei) von 210 bis 350 g/100 g, aufweist.

5.  Verfahren nach Anspruch 3 oder 4,
    **dadurch gekennzeichnet,**
    **dass** die in Schritt a) eingesetzte Fällungskieselsäure vor der Durchführung von Schritt a) mindestens einem Trocknungsschritt unterworfen wurde, wobei in mindestens einem Trocknungsschritt eine Düsenturmtrocknung durchgeführt wurde oder dass die in Schritt a) verwendete Fällungskieselsäure vor der Durchführung von Schritt a) mit Wasser in Kontakt gebracht wurde um einen Wassergehalt von 2 bis 70 Gew. % aufzuweisen.

6.  Verfahren nach einem der Ansprüche 3 bis 5,
    **dadurch gekennzeichnet,**
    **dass** als Base in Schritt b) eine bei 23°C und Atmosphärendruck gasförmige Base, ausgewählt aus der Gruppe, die aus gasförmigen Alkylaminen und Ammoniak besteht, verwendet wird.

7.  Verfahren nach Anspruch 6,
    **dadurch gekennzeichnet,**
    **dass** der pH-Wert der Fällungskieselsäure nach in Kontakt bringen mit der gasförmigen Base im Bereich von 8 bis 12 liegt.

8.  Verfahren nach einem der Ansprüche 6 oder 7,

**dadurch gekennzeichnet,**
**dass** die Trocknung in Schritt c) durch Austreiben des Wassers und der Base mittels zumindest einem Gas/Dampf, ausgewählt aus der Gruppe bestehend aus Luft, Wasserdampf, Edelgasen, oder Gemischen der zuvor genannten Gase und/oder Dämpfe, wobei das Gas/der Dampf vorzugsweise eine Temperatur von größer gleich 20 °C aufweist, oder mittels eines Vakuumtrockners oder mittels Stromtrockner, Etagentrockner, Bandtrockner, Drehrohrtrockner oder Trokkenschrank erfolgt.

9. Verfahren nach Anspruch 8,
**dadurch gekennzeichnet,**
**dass** die Trocknung in Schritt c) mittels Stromtrockner, Etagentrockner, Bandtrockner, Drehrohrtrockner oder Trokkenschrank erfolgt und dass entweder zwischen den Schritten b) und c) oder nach Schritt c) der pH-Wert der Fällungskieselsäure durch in Kontakt bringen mit einem Säuerungsmittel auf pH 5,5 bis 8,0 eingestellt wird.

10. Verfahren nach einem der Ansprüche 3 bis 5,
**dadurch gekennzeichnet,**
**dass** die Base in Schritt b) ausgewählt ist aus der Gruppe Lösungen von Alkalimetallhydroxiden, Erdalkalimetallhydroxiden, Alkalimetalloxiden, Erdalkalimetalloxiden, Ammoniak, Carbonaten, Bicarbonaten und Aminen.

11. Verfahren nach Anspruch 10,
**dadurch gekennzeichnet,**
**dass** das in Kontakt bringen der Fällungskieselsäure mit der Baselösung in Schritt b) durch Aufsprühen der Basenlösung auf die Fällungskieselsäure, durch Auftropfen der Basenlösung auf die Fällungskieselsäure oder durch Einrühren bzw. Einmischen der Fällungskieselsäure in die Basenlösung oder durch Herstellen einer Suspension bzw. Dispersion der Fällungskieselsäure in der Basenlösung erfolgt

12. Verfahren nach Anspruch 10 oder 11
**dadurch gekennzeichnet,**
**dass** der pH-Wert der Fällungskieselsäure nach in Kontakt bringen mit der Basenlösung im Bereich von 8 bis 12 liegt und/oder dass entweder zwischen den Schritten b) und c) oder nach Schritt c) der pH-Wert der Fällungskieselsäure durch in Kontakt bringen mit einem Säuerungsmittel auf pH 5 bis 9 eingestellt wird.

13. Verwendung der Fällungskieselsäuren nach einem der Ansprüche 1 oder 2 zur Herstellung von Absorbaten.

14. Absorbate umfassend zumindest eine der Fällungskieselsäuren nach einem der Ansprüche 1 oder 2, bevorzugt mit einem Gehalt an absorbierter Substanz in den Absorbaten welcher zwischen 5 ml / 100 g Fällungskieselsäure und 230 ml / 100 g Fällungskieselsäure liegt.

15. Absorbat nach Anspruch 14,
**dadurch gekennzeichnet,**
**dass** zumindest eine zu absorbierende Substanz ausgewählt aus der Gruppe bestehend aus Ameisensäure, Propionsäure, Milchsäure, Phosphorsäure, Cholinchloridlösung, Vitamin E-Acetat und derivate, Pflanzenextrakte wie zum Beispiel Tagetesextrakt, Melaminharze und Lackadditive auf der Fällungskieselsäure absorbiert ist.

**Claims**

1. Precipitated silica with

    - a DBP absorption (anhydrous) of 210 to 270 g/100 g
    - a $d_{50}$ after 1 min of ultrasound exposure of 220 to 400 $\mu$m
    - a proportion of particles smaller than 200 $\mu$m after 1 min of ultrasound exposure of less than 35% by volume.

2. Precipitated silica according to Claim 1,
**characterized in that**
it has a pH in the range from 5.5 to 9.5 and/or a $d_{50}$ after 1 min of ultrasound of 270 to 360 $\mu$m and/or a proportion of particles smaller than 200 $\mu$m after 1 min of ultrasound exposure of 1-30% by volume, and/or **in that** it has an approximately spherical particle shape.

3. Process for preparing precipitated silicas, comprising the steps of

   a) providing a precipitated silica with a mean particle size $d_{50}$ without ultrasound exposure of 230 to 600 $\mu$m and a moisture content of 2 to 70% by weight

   b) contacting the precipitated silica from step a) with at least one basic substance or at least one solution of at least one basic substance for 1 min to 72 h, preferably at a temperature of 10 to 150°C,

   c) drying the base-treated precipitated silica.

4. Process according to Claim 3,
   **characterized in that**
   the precipitated silica used in step a) has a DBP absorption (anhydrous) of 210 to 350 g/100 g.

5. Process according to Claim 3 or 4,
   **characterized in that**
   the precipitated silica used in step a), before the performance of step a), was subjected to at least one drying step, at least one drying step having involved performance of a spray tower drying, or **in that** the precipitated silica used in step a), before the performance of step a), was contacted with water in order to have a water content of 2 to 70% by weight.

6. Process according to one of Claims 3 to 5,
   **characterized in that**
   the base used in step b) is a base which is gaseous at 23°C and atmospheric pressure and is selected from the group consisting of gaseous alkylamines and ammonia.

7. Process according to Claim 6,
   **characterized in that**
   the pH of the precipitated silica after contacting with the gaseous base is within the range from 8 to 12.

8. Process according to one of Claims 6 and 7,
   **characterized in that**
   the drying in step c) is effected by driving out the water and the base by means of at least one gas/vapour selected from the group consisting of air, steam, noble gases, or mixtures of the aforementioned gases and/or vapours, said gas/vapour preferably having a temperature of greater than or equal to 20°C, or by means of a vacuum dryer or by means of a flow dryer, staged dryer, belt dryer, rotary tube dryer or drying cabinet.

9. Process according to Claim 8,
   **characterized in that**
   the drying in step c) is effected by means of a flow dryer, staged dryer, belt dryer, rotary tube dryer or drying cabinet, and **in that**, either between steps b) and c) or after step c), the pH of the precipitated silica is adjusted to pH 5.5 to 8.0 by contacting with an acidifier.

10. Process according to one of Claims 3 to 5,
    **characterized in that**
    the base in step b) is selected from the group of solutions of alkali metal hydroxides, alkaline earth metal hydroxides, alkali metal oxides, alkaline earth metal oxides, ammonia, carbonates, bicarbonates and amines.

11. Process according to Claim 10,
    **characterized in that**
    the contacting of the precipitated silica with the base solution in step b) is effected by spraying the base solution onto the precipitated silica, by adding the base solution dropwise to the precipitated silica, or by stirring or mixing the precipitated silica into the base solution, or by preparing a suspension or dispersion of the precipitated silica in the base solution.

12. Process according to Claim 10 or 11,
    **characterized in that**
    the pH of the precipitated silica after contacting with the base solution is in the range from 8 to 12 and/or **in that**, either between steps b) and c) or after step c), the pH of the precipitated silica is adjusted to pH 5 to 9 by contacting with an acidifier.

**13.** Use of the precipitated silicas according to either of Claims 1 or 2 for producing absorbates.

**14.** Absorbates comprising at least one of the precipitated silicas according to either of Claims 1 or 2, preferably with a content of absorbed substance in the absorbates between 5 ml/100 g of precipitated silica and 230 ml/100 g of precipitated silica.

**15.** Absorbate according to Claim 14,
**characterized in that**
at least one substance to be absorbed selected from the group consisting of formic acid, propionic acid, lactic acid, phosphoric acid, choline chloride solution, vitamin E acetate and derivatives, plant extracts, for example tagetes extract, melamine resins and paint additives is absorbed on the precipitated silica.

**Revendications**

**1.** Acide silicique précipité ayant

- une absorption de DBP (anhydre) de 210 à 270 g/100 g
- une valeur $d_{50}$, après 1 min d'action d'ultrasons, de 220 à 400 $\mu$m
- une proportion de particules de taille inférieure à 200 $\mu$m, après 1 min d'action d'ultrasons, de moins de 35 % en volume.

**2.** Acide silicique précipité selon la revendication 1,
**caractérisé en ce qu'**il présente un pH dans l'intervalle de 5,5 à 9,5 et/ou une valeur $d_{50}$, après 1 min d'ultrasons, de 270 à 360 $\mu$m et/ou une proportion de particules de taille inférieure à 200 $\mu$m, après 1 min d'action d'ultrasons, de 1-30 % en volume et/ou en ce qu'il présente une forme de particule à peu près sphérique.

**3.** Procédé pour la préparation d'acides sulfuriques précipités, comprenant les étapes

a) disposition d'un acide silicique précipité ayant une taille moyenne de particule $d_{50}$ sans action d'ultrasons de 230 à 600 $\mu$m et une teneur en humidité de 2 à 70 % en poids
b) mise en contact de l'acide silicique précipité provenant de l'étape a) avec au moins une substance basique ou au moins une solution d'au moins une substance basique pendant 1 min à 72 h, de préférence à une température de 10 à 150°C,
c) séchage de l'acide silicique précipité traité par la base.

**4.** Procédé selon la revendication 3,
**caractérisé en ce que** l'acide silicique précipité utilisé dans l'étape a) présente une absorption de DBP (anhydre) de 210 à 350 g/100 g.

**5.** Procédé selon la revendication 3 ou 4,
**caractérisé en ce qu'**avant l'exécution de l'étape a) l'acide silicique précipité utilisé dans l'étape a) a été soumis à au moins une étape de séchage, un séchage par atomisation ayant été effectué dans au moins une étape de séchage ou **en ce qu'**avant l'exécution de l'étape a) l'acide silicique précipité utilisé dans l'étape a) a été mis en contact avec de l'eau afin de présenter une teneur en eau de 2 à 70 % en poids.

**6.** Procédé selon l'une quelconque des revendications 3 à 5,
**caractérisé en ce que** dans l'étape b) on utilise comme base une base gazeuse à 23°C et sous la pression atmosphérique, choisie dans le groupe qui consiste en alkylamines gazeuses et ammoniac.

**7.** Procédé selon la revendication 6,
**caractérisé en ce qu'**après mise en contact avec la base gazeuse le pH de l'acide silicique précipité se situe dans l'intervalle de 8 à 12.

**8.** Procédé selon la revendication 6 ou 7,
**caractérisé en ce que** dans l'étape c) le séchage s'effectue par extraction de l'eau et de la base au moyen d'un gaz/d'une vapeur, choisis dans le groupe constitué par l'air, la vapeur d'eau, les gaz rares, ou des mélanges des gaz et/ou vapeurs précités, le gaz/la vapeur présentant de préférence une température supérieure ou égale à 20°C, ou au moyen d'un sécheur à vide ou au moyen d'un sécheur pneumatique, sécheur à étages, sécheur à bande, sécheur tubulaire rotatif ou d'une étuve.

9. Procédé selon la revendication 8,
   **caractérisé en ce que** le séchage dans l'étape c) s'effectue au moyen d'un sécheur à vide ou au moyen d'un sécheur pneumatique, sécheur à étages, sécheur à bande, sécheur tubulaire rotatif ou d'une étuve et **en ce que** soit entre les étapes b) et c) soit après l'étape c) on ajuste à pH 5,5 à 8,0 le pH de l'acide silicique précipité, par mise en contact avec un agent d'acidification.

10. Procédé selon l'une quelconque des revendications 3 à 5,
    **caractérisé en ce que** la base dans l'étape b) est choisie dans le groupe constitué par des solutions d'hydroxydes de métaux alcalins, d'hydroxydes de métaux alcalino-terreux, d'oxydes de métaux alcalins, d'oxydes de métaux alcalino-terreux, d'ammoniac, de carbonates,
    de bicarbonates et d'amines.

11. Procédé selon la revendication 10,
    **caractérisé en ce que** la mise en contact de l'acide silicique précipité avec la solution de base dans l'étape b) s'effectue par pulvérisation de la solution de base sur l'acide silicique précipité, par versement goutte à goutte de la solution de base sur l'acide silicique précipité ou par délayage ou incorporation de l'acide silicique précipité dans la solution de base ou par préparation d'une suspension ou dispersion de l'acide silicique précipité dans la solution de base.

12. Procédé selon la revendication 10 ou 11,
    **caractérisé en ce qu'**après mise en contact avec la solution de base le pH de l'acide silicique précipité se situe dans l'intervalle de 8 à 12 et/ou **en ce que** soit entre les étapes b) et c) soit après l'étape c) on ajuste à pH 5 à 9 le pH de l'acide silicique précipité, par mise en contact avec un agent d'acidification.

13. Utilisation des acides siliciques précipités selon la revendication 1 ou 2, pour la préparation de produits d'absorption.

14. Produits d'absorption comprenant au moins l'un des acides siliciques précipités selon la revendication 1 ou 2, de préférence ayant une teneur en substance absorbée dans les produits d'absorption qui est comprise entre 5 ml/100 g d'acide silicique précipité et 230 ml/100 g d'acide silicique précipité.

15. Produit d'absorption selon la revendication 14,
    **caractérisé en ce qu'**au moins une substance à absorber choisie dans le groupe constitué par l'acide formique, l'acide propionique, l'acide lactique, l'acide phosphorique, une solution de chlorure de choline, l'acétate de vitamine E et dérivés, des extraits végétaux comme par exemple l'extrait de tagète, les résines mélamine et additifs pour peintures, est absorbée sur l'acide silicique précipité.

**IN DER BESCHREIBUNG AUFGEFÜHRTE DOKUMENTE**

**In der Beschreibung aufgeführte Patentdokumente**

- EP 0984772 B1
- EP 0966207 A
- DE 19807700 A1
- US 6013234 A